(19) Europäisches Patentamt
European Patent Office
Office européen des brevets

(11) **EP 4 572 433 A1**

(12) **EUROPEAN PATENT APPLICATION**
published in accordance with Art. 153(4) EPC

(43) Date of publication:
**18.06.2025 Bulletin 2025/25**

(21) Application number: **23853087.7**

(22) Date of filing: **11.08.2023**

(51) International Patent Classification (IPC):
*H04W 52/36* (2009.01)    *H04W 52/32* (2009.01)
*H04W 52/14* (2009.01)    *H04W 8/24* (2009.01)
*H04W 48/10* (2009.01)    *H04W 74/08* (2024.01)
*H04W 84/06* (2009.01)

(52) Cooperative Patent Classification (CPC):
H04W 8/24; H04W 48/10; H04W 52/14;
H04W 52/32; H04W 52/36; H04W 74/08;
H04W 84/06

(86) International application number:
**PCT/KR2023/011966**

(87) International publication number:
**WO 2024/035221 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100964**

(71) Applicant: **LG Electronics Inc.**
**Yeongdeungpo-gu**
**Seoul 07336 (KR)**

(72) Inventors:
• **BAE, Duckhyun**
**Seoul 06772 (KR)**
• **SHIN, Seokmin**
**Seoul 06772 (KR)**
• **PARK, Haewook**
**Seoul 06772 (KR)**
• **KO, Hyunsoo**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD, USER EQUIPMENT, PROCESSING DEVICE, AND STORAGE MEDIUM FOR TRANSMITTING UPLINK SIGNAL, AND METHOD AND BASE STATION FOR RECEIVING UPLINK SIGNAL**

(57)    This BS may provide, to a UE, antenna polarization information related to an antenna of the BS. The UE may determine a power offset related to the antenna polarization, on the basis of the antenna polarization information, and may determine a transmit power of a PRACH by using the power offset.

**FIG. 15**

Receive antenna polarization information. — S1501

Determine value of power offset DELTA_POLAR based on received antenna polarization information and its own antenna polarization information. — S1503

Determine transmission power for PRACH. — S1505

Transmit PRACH with determined transmission power. — S1507

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### TECHNICAL PROBLEM

One objective of the present disclosure is to provide methods and procedures for controlling or determining transmission power suitable for use in non-terrestrial network (NTN) services.

Another objective of the present disclosure is to provide methods and procedures for controlling or determining transmission power in consideration of antenna polarization.

The objects to be achieved with the present disclosure are not limited to what has been particularly described hereinabove and other objects not described herein will be more clearly understood by persons skilled in the art from the following detailed description.

### TECHNICAL SOLUTION

In an aspect of the present disclosure, provided herein is a method of transmitting an uplink signal by a user equipment (UE) in a wireless communication system. The method may include: acquiring system information regarding a cell; determining a random access channel (RACH) occasion based on the system information; determining transmission power for a physical random access channel (PRACH) in a random access procedure; and transmitting the PRACH on the cell at the RACH occasion with the transmission power. Determining the transmission power may include: determining a power offset value based on antenna polarization information received from a base station (BS); and determining the transmission power based on the power offset value.

In another aspect of the present disclosure, provided herein is a UE configured to transmit an uplink signal in a wireless communication system. The UE includes: at least one transceiver; at least one processor; and at least one computer memory operably connected to the at least one processor and storing instructions that, when executed, cause the at least one processor to perform operations. The operations may include: acquiring system information regarding a cell; determining a RACH occasion based on the system information; determining transmission power for a PRACH in a random access procedure; and transmitting the PRACH on the cell at the RACH occasion with the transmission power. Determining the transmission power may include: determining a power offset value based on antenna polarization information received from a BS; and determining the transmission power based on the power offset value.

In another aspect of the present disclosure, provided herein is a processing device. The processing device includes: at least one processor; and at least one computer memory operably connected to the at least one processor and storing instructions that, when executed, cause the at least one processor to perform operations. The operations may include: acquiring system information regarding a cell; determining a RACH occasion based on the system information; determining transmission power for a PRACH in a random access procedure; and transmitting the PRACH on the cell at the RACH occasion with the transmission power. Determining the transmission power may include: determining a power offset value based on antenna polarization information received from a BS; and determining the transmission power based on the power offset value.

In another aspect of the present disclosure, provided herein is a computer-readable storage medium configured to store at least one program code comprising instructions that, when executed, cause at least one processor to perform operations. The operations may include: acquiring system information regarding a cell; determining a RACH occasion based on the system information; determining transmission power for a PRACH in a random access procedure; and transmitting the PRACH on the cell at the RACH occasion with the transmission power. Determining the transmission power may include: determining a power offset value based on antenna polarization information received from a BS; and determining the transmission power based on the power offset value.

In another aspect of the present disclosure, provided herein is a method of receiving, by a BS, an uplink signal from a UE in a wireless communication system. The method may include: transmitting system information regarding a cell; attempting to receive a PRACH in a random access procedure at a RACH occasion based on the system information; and transmitting a random access response for the PRACH based on receiving the PRACH on the cell at the RACH occasion. The system information may include antenna polarization information regarding antennas of the BS. The PRACH may be transmitted with transmission power determined based on a power offset value, which is determined based on the antenna polarization information.

In a further aspect of the present disclosure, provided herein is a BS configured to receive an uplink signal from a UE in a wireless communication system. The BS includes: at least one transceiver; at least one processor; and at least one computer memory operably connected to the at least one processor and storing instructions that, when executed, cause the at least one processor to perform operations. The operations may include: transmitting system information regarding a cell; attempting to receive a PRACH in a random access procedure at a RACH occasion based on the system information; and transmitting a random access response for the PRACH based on receiving the PRACH on the cell at the RACH occasion. The system information may include antenna polarization information regarding antennas of the BS. The PRACH may be transmitted with transmission power determined based on a power offset value, which is determined based on the antenna polarization information.

In each aspect of the present disclosure, the transmission power for the PRACH may be determined based on: $P_{PRACH,b,f,c}(i) = \min\{P_{CMAC,f,c}(i), P_{PRACH,target,f,c} + PL_{b,f,c} + DELTA\_POLAR\}$ [dBm], where $P_{CMAC,f,c}(i)$ is UE-configured maximum output power for a carrier f of the cell c during a RACH occasion i, $P_{PRACH,target,f,c}$ is PRACH target received power for an active uplink (UL) bandwidth part (BWP) b of the carrier f of the cell c, $PL_{b,f,c}$ is a pathloss for the active UL BWP b of the cell c, which is calculated based on a downlink reference signal related to the PRACH transmission, and DELTA_POLAR is the power offset value.

In each aspect of the present disclosure, $P_{PRACH,target,f,c}$ may be determined based on: preambleReceived-TargetPower + DELTA_PREAMBLE + (PREAMBLE_POWER_RAMPING_COUNTER - 1)*PREAMBLE_POWER_RAMPING_STEP + POWER_OFFSET_2STEP_RA.

Here, preambleReceivedTargetPower, POWER_OFFSET_2STEP_RA, and PREAMBLE_POWER_RAMPING_STEP are values determined based on higher layer parameters received from the BS, DELTA_PREAMBLE is a predefined value based on a preamble format of the PRACH, and PREAMBLE_POWER_RAMPING_COUNTER is a number of times that transmission power is ramped for the random access procedure.

In each aspect of the present disclosure, the transmission power is determined based on: $P_{PRACH,b,f,c}(i) = \min\{P_{CMAC,f,c}(i), P_{PRACH,target,f,c} + PL_{b,f,c}\}$ [dBm], where $P_{CMAC,f,c}(i)$ is UE-configured maximum output power for a carrier f of the cell c during a RACH occasion i, $P_{PRACH,target,f,c}$ is PRACH target received power for an active UL BWP b of the carrier f of the cell c, and $PL_{b,f,c}$ is a pathloss for the active UL BWP b of the cell c, which is calculated based on a downlink reference signal related to the PRACH transmission. $P_{PRACH,target,f,c}$ may be determined based on: preambleReceivedTargetPower + DELTA_PREAMBLE + DELTA_POLAR + (PREAMBLE_POWER_RAMPING_COUNTER - 1)*PREAMBLE_POWER_RAMPING_STEP + POWER_OFFSET_2STEP_RA, where preambleReceivedTargetPower, POWER_OFFSET_2STEP_RA, and PREAMBLE_POWER_RAMPING_STEP are values determined based on higher layer parameters received from the BS, DELTA_PREAMBLE is a predefined value based on a preamble format of the PRACH, PREAMBLE_POWER_RAMPING_COUNTER is a number of times that transmission power is ramped for the random access procedure, and DELTA_POLAR is the power offset value.

In each aspect of the present disclosure, the power offset value may be determined as 3 dB based on that the antenna polarization information is different from antenna polarization information possessed by the UE.

In each aspect of the present disclosure, the power offset value may be determined as 0 dB based on that the antenna polarization information is identical to antenna polarization information possessed by the UE.

In each aspect of the present disclosure, a downlink reference signal may be a synchronization signal block (SSB). The RACH occasion may be related to an index of the SSB.

The foregoing solutions are merely a part of the examples of the present disclosure and various examples into which the technical features of the present disclosure are incorporated may be derived and understood by persons skilled in the art from the following detailed description.

ADVANTAGEOUS EFFECTS

According to implementation(s) of the present disclosure, methods and procedures for controlling or determining transmission power suitable for non-terrestrial network (NTN) services may be provided.

According to implementation(s) of the present disclosure, methods and procedures for controlling or determining transmission power appropriately in consideration of antenna polarization may be provided.

The effects according to the present disclosure are not limited to what has been particularly described hereinabove and other effects not described herein will be more clearly understood by persons skilled in the art related to the present disclosure from the following detailed description.

## BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:

FIG. 1 illustrates an example of a communication system 1 to which implementations of the present disclosure are applied;

FIG. 2 is a block diagram illustrating examples of communication devices capable of performing a method according to the present disclosure;

FIG. 3 illustrates another example of a wireless device capable of performing implementation(s) of the present disclosure;

FIG. 4 illustrates an example of a frame structure used in a 3rd generation partnership project (3GPP)-based wireless communication system;

FIG. 5 illustrates a resource grid of a slot;

FIG. 6 illustrates physical channels and a signal transmission/reception procedure using the physical channels in a 3rd generation partnership project based (3GPP-based) communication system as an exemplary wireless communication system;

FIG. 7 illustrates a system information (SI) acquisition procedure;

FIG. 8 illustrates initial network access and subsequent communication processes;

FIG. 9 illustrates an example of physical downlink shared channel (PDSCH) time-domain resource allocation by a physical downlink control channel (PDCCH) and an example of physical uplink shared channel (PUSCH) time-domain resource allocation by the PDCCH;

FIG. 10 illustrates a non-terrestrial network (NTN);

FIG. 11 illustrates cell types supported by a satellite;

FIG. 12 illustrates a position estimation format (ephemeris format) based on orbital parameters;

FIGS. 13 and 14 illustrate examples of polarization used in communication;

FIG. 15 illustrates a flow of uplink (UL) signal transmission by a UE according to some implementations of the present disclosure;

FIGS. 16 and 17 illustrate preamble formats available in some implementations of the present disclosure; and

FIG. 18 illustrates a flow of UL signal reception by a BS according to some implementations of the present disclosure.

## DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In the present disclosure, '/' may indicate inclusion of all the contents separated by '/' (and) or inclusion of only some of the contents separated by '/' (or).

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

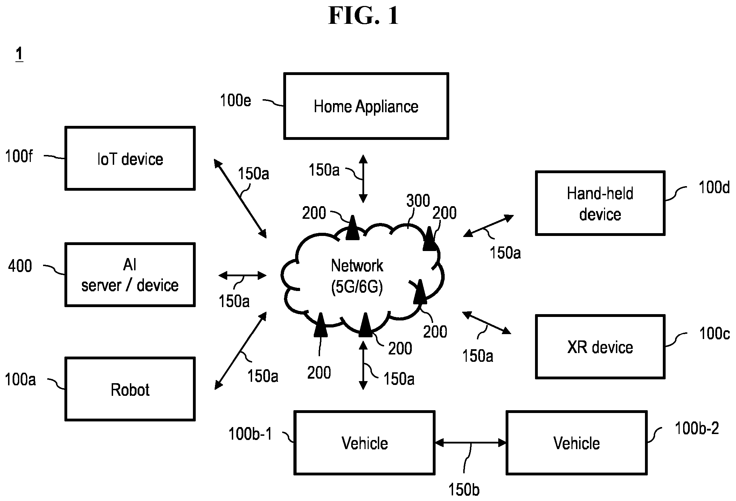

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

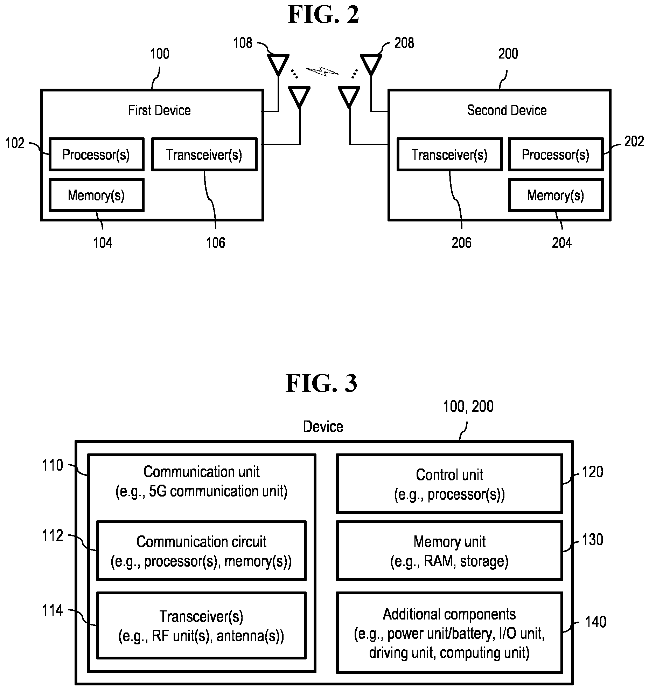

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/-proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/-proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

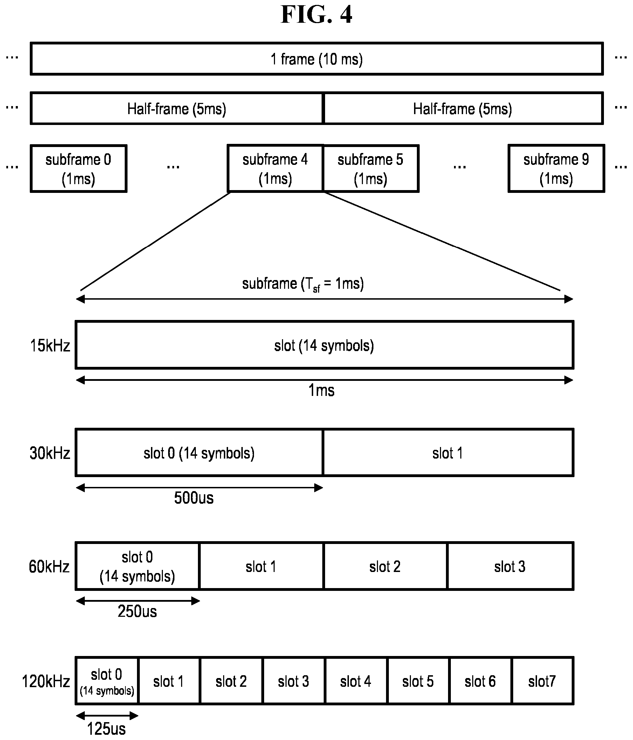

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of $T_f = (\triangle f_{max}*N_f/100)*T_c = 10$ ms and is divided into two half-frames of 5 ms each. A basic time unit for NR is $T_c = 1/(\triangle f_{max}*N_f)$ where $\triangle f_{max} = 480*10^3$ Hz and $N_f = 4096$. For reference, a basic time unit for LTE is $T_s = 1/(\triangle f_{ref}*N_{f,ref})$ where $\triangle f_{ref} = 15*10^3$ Hz and $N_{f,ref} = 2048$. $T_c$ and $T_f$ have the relationship of a constant $\kappa = T_c/T_f = 64$. Each half-frame includes 5 subframes and a duration $T_{sf}$ of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing $\triangle f = 2^u*15$ kHz. The table below shows the number of OFDM symbols ($N^{slot}_{symb}$) per slot, the number of slots ($N^{frame,u}_{slot}$) per frame, and the number of slots ($N^{subframe,u}_{slot}$) per subframe.

[Table 1]

| $U$ | $N^{slot}_{symb}$ | $N^{frame,u}_{slot}$ | $N^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing $\triangle f = 2^u*15$ kHz.

[Table 2]

| u | $N^{slot}_{symb}$ | $N^{frame,u}_{slot}$ | $N^{subframe,u}_{slot}$ |
|---|---|---|---|
| 2 | 12 | 40 | 4 |

For a subcarrier spacing configuration u, slots may be indexed within a subframe in ascending order as follows: $n^u_s \in \{0, ..., n^{subframe,u}_{slot} - 1\}$ and indexed within a frame in ascending order as follows: $n^u_{s,f} \in \{0, ..., n^{frame,u}_{slot} - 1\}$.

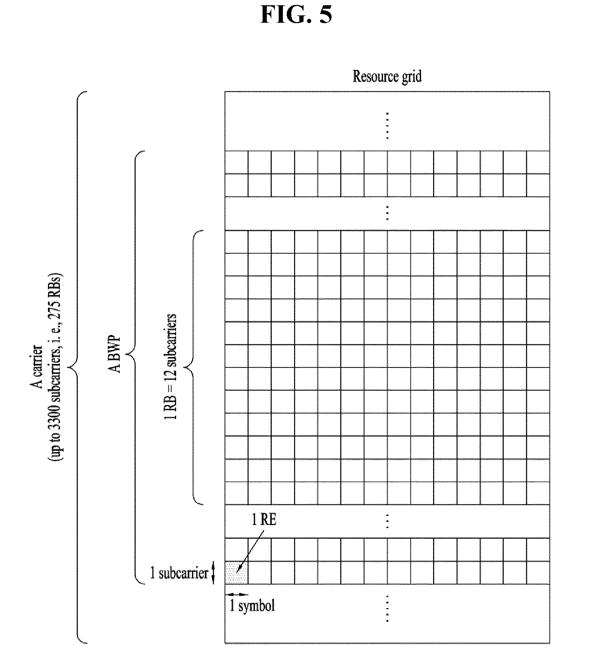

FIG. 5 illustrates a resource grid of a slot. The slot includes multiple (e.g., 14 or 12) symbols in the time domain. For each numerology (e.g., subcarrier spacing) and carrier, a resource grid of $N^{size,u}_{grid,x}*N^{RB}_{sc}$ subcarriers and $N^{subframe,u}_{symb}$ OFDM symbols is defined, starting at a common resource block (CRB) $N^{start,u}_{grid}$ indicated by higher layer signaling (e.g. RRC signaling), where $N^{size,u}_{grid,x}$ is the number of resource blocks (RBs) in the resource grid and the subscript x is DL for downlink and UL for uplink. $N^{RB}_{sc}$ is the number of subcarriers per RB. In the 3GPP-based wireless communication system, $N^{RB}_{sc}$ is typically 12. There is one resource grid for a given antenna port $p$, a subcarrier spacing configuration $u$, and a transmission link (DL or UL). The carrier bandwidth $N^{size,u}_{grid}$ for the subcarrier spacing configuration u is given to the UE by a higher layer parameter (e.g., RRC parameter). Each element in the resource grid for the antenna port $p$ and the subcarrier spacing configuration $u$ is referred to as a resource element (RE) and one complex symbol may be mapped to each RE. Each RE in the resource grid is uniquely identified by an index $k$ in the frequency domain and an index $l$ representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration $u$. The center of subcarrier 0 of CRB 0 for the subcarrier spacing configuration $u$ is equal to 'Point A' which serves as a common reference point for RB grids. The PRBs for subcarrier spacing configuration u are defined within a bandwidth part (BWP) and numbered from 0 to $N^{size,u}_{BWP,i}-1$, where i is a number of the BWP. The relation between a PRB $n_{PRB}$ in a BWP i and a CRB $n^u_{CRB}$ is given by: $n^u_{PRB} = n^u_{CRB} + N^{size,u}_{BWP,i}$, where $N^{size}_{BWP,i}$ is a CRB in which the BWP starts relative to CRB 0. The BWP includes a plurality of consecutive RBs in the frequency domain. For example, the BWP may be a subset of contiguous CRBs defined for a given numerology $u_i$ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB $N^{start}_{BWP} = O_{carrier} + RB_{start}$ and the number of contiguous RBs $N^{size}_{BWP} = L_{RB}$

provided by an RRC parameter *locationAndBandwidth,* which indicates an offset $RB_{set}$ and a length $L_{RB}$ as a resource indicator value (RIV) on the assumption of $N^{start}_{BWP}$ = 275, and a value $O_{carrier}$ provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to $N^{size,u}_{BWP,i}-1$, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

[Table 3]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

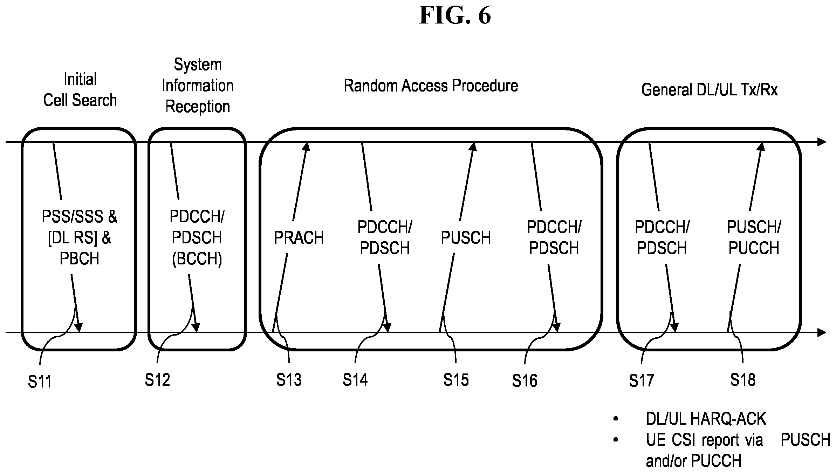

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

During initial cell selection, the UE assumes that a half-frame containing an SSB is repeated at a periodicity of 20 ms. Based on an MIB, the UE may check whether there is a control resource set (CORESET) (e.g., CORESET#0) for a Type0-PDCCH common search space (CSS), such as CORESET#0. If $k_{SSB}$ <= 23 (for FR1) or $k_{SSB}$ <= 11 (for FR2), the UE may determine that there is a CORESET for the Type0-PDCCH CSS. However, if $k_{SSB}$ > 23 (for FR1) or $k_{SSB}$ > 11 (for FR2), the UE may determine that there is no CORESET for the Type0-PDCCH CSS. The Type0-PDCCH CSS is a type of PDCCH search space used to transmit a PDCCH that schedules a system information (SI) message. If the Type0-PDCCH CSS exists, the UE may determine, based on information (e.g., pdcch-ConfigSIB 1) in the MIB, (i) a plurality of consecutive RBs and one or more consecutive symbols included in the CORESET (e.g., CORESET#0) and (ii) a PDCCH occasion (i.e., a time-domain position for receiving a PDCCH) (e.g., search space #0). If the Type0-PDCCH CSS does not exist, pdcch-ConfigSIB1 provides information about a frequency location where SSB/SIB1 exists and a frequency ranges where SSB/SIB1 does not exist.

Beam sweeping means that a transmission and reception point (TRP) (e.g., BS/cell) changes the beam (direction) of a radio signal over time. In the present disclosure, the terms "beam" and "beam direction" may be used interchangeably. An SSB may be periodically transmitted by beam sweeping. In this case, an SSB index is implicitly linked to an SSB beam. The SSB beam may be changed on an SSB (index) basis or on an SSB (index) group basis. In the latter case, the SSB beam remains the same within an SSB (index) group. That is, the transmission beam direction of an SSB may be repeated across a plurality of consecutive SSBs. A set of SSBs are transmitted within a 5-ms half-frame. A set of SSBs transmitted within a 5-ms half-frame is called an SSB burst set. The maximum number $L_{max}$ of SSBs transmitted in the SSB burst set has a value of 4, 8, or 64 depending on the frequency band to which the carrier belongs.

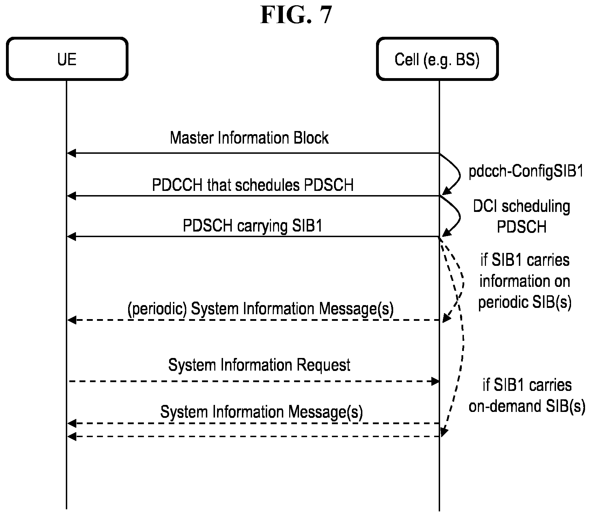

FIG. 7 illustrates a system information (SI) acquisition procedure. The UE may acquire access stratum/non-access stratum (AS/NAS) information from the SI acquisition procedure. The SI acquisition procedure may be applied to UEs in the following states: RRC_IDLE, RRC_INACTIVE, and RRC_CONNECTED. RRC_CONNECTED refers to a state in which the UE has established an RRC connection with the network. RRC_IDLE refers to a state in which the UE is not registered in a specific cell and does not receive AS context and other information from the network. RRC_INACTIVE refers to a state in which the UE remains in a state called CM-CONNECTED where the UE has a signaling connection with the core network for connection management (CM) and is capable of moving within an area defined by the radio access network (RAN) (e.g., BS(s)) without notifying the RAN. CM_CONNECTED refers to a state in which the UE has a NAS signaling connection with the core network. CM_IDLE refers to a state in which the UE has no NAS signaling connection.

In the 3GPP based system, system information (SI) may be classified into a master information block (MIB) and a plurality of system information blocks (SIBs). MIB and a plurality of SIBs are divided into minimum system information (SI) and other SI, where the minimum SI is comprised of MIB and SystemInformationBlock1 (SIB1) and comprises basic information required for initial access and information for acquiring any other SI. SIB1 may be referred to as remaining minimum system information (RMSI). The details may be found in the following.

- The MIB is always transmitted on the BCH with a periodicity of 80 ms and repetitions made within 80 ms. The MIB includes information/parameters related to SIB1 reception and is transmitted through the PBCH in the SSB. During initial cell selection, the UE assumes that a half-frame including SSB(s) is repeated with a periodicity of 20 ms. The UE may determine based on the MIB whether there is a control resource set (CORESET) for a Type0-PDCCH common search space. The Type0-PDCCH common search space is a kind of PDCCH search space and used to transmit a PDCCH that schedules an SI message. When the Type0-PDCCH common search space exists, the UE may determine based on information in the MIB (e.g., pdcch-ConfigSIB1) (i) a plurality of consecutive RBs and one or more consecutive symbols included in a CORESET and (ii) a PDCCH occasion (i.e., a time-domain position for PDCCH reception). When there is no Type0-PDCCH common search space, pdcch-ConfigSIB1 provides information regarding a frequency position where the SSB/SIB1 exists and information regarding a frequency range where the SSB/SIB1 does not exist.

- The SIB1 is transmitted on the downlink shared channel (DL-SCH) with a periodicity of 160 ms and variable transmission repetition periodicity within 160 ms. The default transmission repetition periodicity of SIB1 is 20 ms but the actual transmission repetition periodicity is up to network implementation. SIB1 includes information regarding availability and scheduling (e.g., transmission periodicity and SI-window size) of the remaining SIBs (hereinafter referred to as SIBx, where x is an integer greater than and equal to 2). For example, SIB1 may indicate whether SIBx is periodically broadcast or provided at the request of the UE in an on-demand way. When SIBx is provided in an on-demand way, SIB1 may include information necessary for the UE to perform an SI request. SIB1 is a cell-specific SIB. A PDCCH that schedules SIB1 is transmitted in the Type0-PDCCH common search space, and SIB1 is transmitted through a PDSCH indicated by the PDCCH.

- SIBx is included in the SI message and transmitted through the PDSCH. Each SI message is transmitted within a periodically occurring time window (i.e., SI-window).

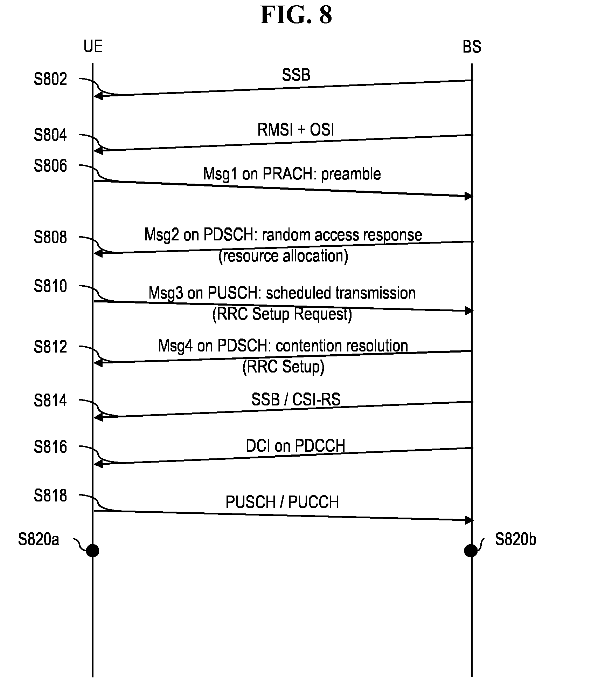

FIG. 8 illustrates initial network access and subsequent communication processes. In 3GPP-based communication systems, particularly in NR, physical channels and RSs may be transmitted based on beamforming. When beamforming-based signal transmission is supported, a beam management process may be performed for beam alignment between the BS and UE. Additionally, signals or channels described in the present disclosure may be transmitted or received based on beamforming. In RRC_IDLE, beam alignment may be performed based on an SSB. In contrast, in RRC_CONNECTED, beam alignment may be performed based on a CSI-RS (on DL) and an SRS (on UL). If beamforming-based signal transmission is not supported, operations related to beams in the following descriptions may be omitted.

Referring to FIG. 8, a network (e.g., BS) may periodically transmit an SSB (S802). The SSB includes a PSS, SSS, and/or PBCH. The SSB may be transmitted based on beam sweeping. The PBCH contains an MIB, which may include information related to RMSI scheduling. Subsequently, the BS may transmit RMSI and other system information (OSI) (S804). This may include information necessary for the UE to perform initial access to the BS (e.g., PRACH configuration information). For example, information about RACH occasions (i.e., PRACH occasions) associated with the SSBs in a cell may be provided via RMSI. For example, the UE may be provided with the number N of SSBs associated with a single PRACH occasion and the number R of contention-based preambles per SSB for each valid PRACH occasion. A PRACH occasion refers to time-frequency resources where a PRACH preamble may be transmitted. If N < 1, one SSB is mapped to 1/N consecutive valid PRACH occasions, and R contention-based preambles associated with SSBs per valid PRACH occasion are indexed consecutively starting from preamble index 0. If N >= 1, R contention-based preambles associated with SSB n (where 1 <= n <= N-1) per valid PRACH occasion are indexed consecutively starting from preamble index $n*N^{total}_{preamble}/N$, where $N^{total}_{preamble}$ is an integer multiple of N and is provided via higher layer signaling (e.g., system information, cell-specific or UE-specific RRC configuration, etc.). The UE selects an SSB among the SSBs received on the cell, where the reference signal received power (RSRP) measured based on the SSB exceeds a threshold, and transmits a RACH preamble over a PRACH associated with the selected SSB (S806). The beam direction of the RACH preamble is associated with a PRACH resource. The association between PRACH resources (and/or RACH preambles) and SSBs (SSB indices) may be configured through SI (e.g., RMSI). The BS may distinguish each random access preamble based on a time/frequency resource (RA occasion, RO) and a random access preamble index (preamble index, PI) on which the random access preamble is transmitted. When the BS receives the random access preamble from the UE, the BS transmits a random access response (RAR) message to the UE over a PDSCH (S808). To receive the RAR message, the UE monitors an L1/L2 control channel (PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR (810). Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE (S812). When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

In FIG. 8, a 4-step random access procedure (S808 to S812) is illustrated, but a 2-step random access procedure (not shown) may be used. The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the present disclosure are realized along with a random access procedure, the implementation(s) of the present disclosure may be carried out together with the 2-step random access procedure to reduce latency involved in the random access procedure. The 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission. Upon receipt of MsgA, the BS may transmit MsgB to the UE. MsgB may include an RAR for the UE. An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

Once an RRC connection is established between the BS and UE through the RACH process, i.e., the random access procedure, subsequent beam alignment may be performed based on an SSB/CSI-RS (on DL) and an SRS (on UL). For example, the UE may receive an SSB/CSI-RS (S814). The SSB/CSI-RS may be used by the UE to generate a beam/CSI report. The BS may request the beam/CSI report from the UE via DCI (S816). In this case, the UE may generate the beam/CSI report based on the SSB/CSI-RS and transmit the generated beam/CSI report to the BS over a PUSCH/PUCCH (S818). The beam/CSI report may include beam measurement results, information about preferred beams, and so on. The BS and UE may switch beams based on the beam/CSI report (S820a and S820b).

Subsequently, the UE and BS may process information in the memory to transmit radio signals or process received radio signals to store the signals in the memory according to some implementations of the present disclosure, based on configuration information obtained during the network access process (e.g., acquisition of system information, RRC connection establishment via a RACH, etc.). The radio signal may include at least one of a PDCCH, a PDSCH, or an RS on DL and at least one of a PUCCH, a PUSCH, or an SRS on UL.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using configured grants for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

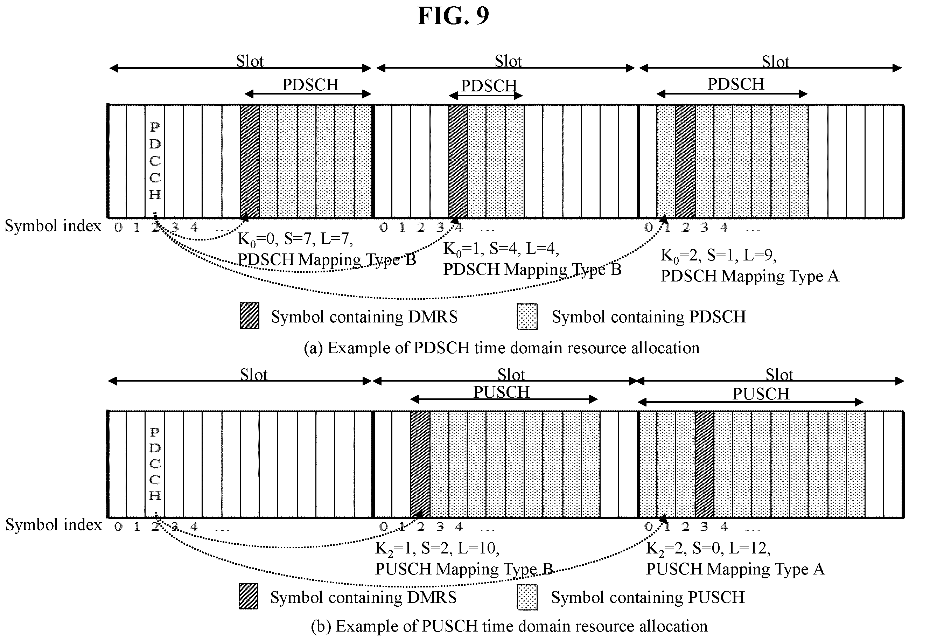

FIG. 9 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset $K_0$, a start and length indicator *SLIV* (or directly, a start position (e.g., start symbol index $S$) and an allocation length (e.g., the number of symbols, $L$) of the PDSCH in a slot), and a PDSCH mapping type. In PUSCH time domain resource configurations, each indexed row defines a UL grant-to-PUSCH slot offset $K_2$, a start position (e.g., start symbol index $S$) and an allocation length (e.g., the number of symbols, $L$) of the PUSCH in a slot, and a PUSCH mapping type. $K_0$ for the PDSCH and $K_2$ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, $L$, counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

One or more CORESETs may be configured to the UE, and a plurality of CORESETs may overlap in the time or frequency domain. Parameters for configuring a CORESET may be provided by the BS.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

To achieve broader coverage or provide wireless communication services in places where it is difficult to install BSs for wireless communication, the use of non-terrestrial network (NTN) services is being considered. An NTN refers to a network or a network segment that uses RF resources mounted on satellites (or unmanned aerial system (UAS) platforms). While traditional terrestrial network (TN) services provide wireless communication to UEs by installing BSs on the ground, NTN services provide wireless communication to UEs by deploying BSs in non-terrestrial locations, such as artificial satellites (geostationary, low Earth orbit, medium Earth orbit, etc.), airplanes, unmanned airships, or drones, instead of on the ground. NTN scenarios also include the following cases: high altitude platform station (HAPS) and air-to-ground (ATG). In some scenarios, for the NTN services, frequency division duplex (FDD) is mainly considered (but time division duplex (TDD) is not completely excluded), and it is assumed that the UE has a GNSS capability.

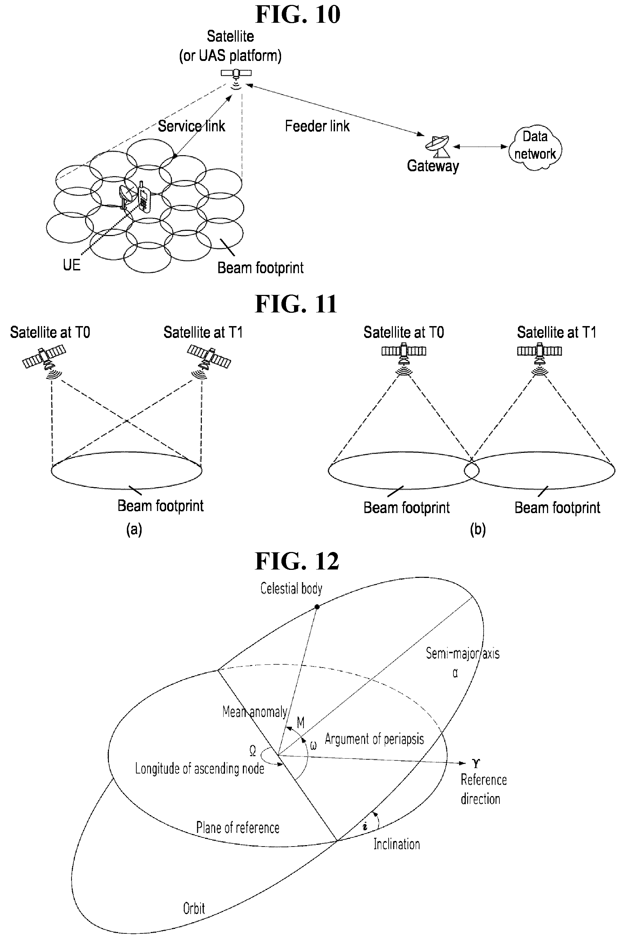

FIG. 10 illustrates an NTN. As shown in FIG. 10, the NTN typically includes the following elements.

> One or more gateways connecting the NTN to a public data network.

>> A geostationary earth orbit (GEO) satellite is supported by one or more gateways deployed across the targeted coverage (e.g., regional or continental coverage) of the satellite. It is assumed that UEs in a cell are served by the gateway.

>> A non-GEO satellite is successively served by one or more gateways at a time. This system ensures service and feeder link continuity between successive serving gateways for a sufficient duration to support mobility anchoring and handover processes.

> A feeder link or radio link between a gateway and a satellite (or UAS platform)

> A service link or radio link between a UE and a satellite (or UAS platform).

> A Satellites (or UAS platforms) capable of implementing transparent or regenerative payloads (including onboard processing). Beams generated by the satellite (or UAS platform) typically create multiple beams for a given service area bounded by the field of view. The footprints of the beams are generally elliptical. The field of view of the satellite (or UAS platform) depends on an onboard antenna diagram and a minimum elevation angle.

>> Transparent payload: The transparent payload performs functions such as RF filtering, frequency conversion, and amplification. Therefore, a waveform signal repeated by the payload remains unchanged.

>> Regenerative payload: The regenerative payload performs functions such as RF filtering, frequency conversion, amplification, demodulation/decoding, switching and/or routing, coding/modulation, and so on. This is effectively equivalent to having all or part of the BS functions (e.g., BS) mounted on a satellite (or UAS platform).

> Optionally, an inter-satellite links (ISL) may be used in satellite deployment. The ISL requires a regenerative payload on a satellite. The ISL may operate in RF frequency bands or optical bands.

> UEs are served by a satellite (or UAS platform) within a targeted service area.

In the present disclosure, a feeder link is a wireless link between the NTN gateway and the NTN payload, while a service link is a wireless link between the NTN payload and the UE. The NTN gateway (e.g., the gateway in FIG. 10) is an earth station located on the surface of the Earth that provides connectivity to the NTN payload via the feeder link. The NTN payload is a network node mounted on a satellite or HAPS, providing connectivity functions between the service link and the feeder link.

There may be different types of satellites (or UAS platforms). The following table illustrates examples of NTN platform types.

[Table 4]

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Typically, a GEO satellite and UAS are used to provide continental, regional, or local services. Constellations of LEO and MEO satellites are used to provide services in both the northern and southern hemispheres. In some cases, the constellations may provide global coverage including polar regions.

FIG. 11 illustrates cell types supported by a satellite. In particular, FIG. 11(a) shows an example of an earth-fixed cell, while FIG. 11(b) illustrates an example of an earth-moving cell.

Referring to FIG. 11(a), in the case of an earth-fixed cell, the cell remains permanently or for a specific service duration at a specific location on the surface of the Earth, based on the beam-steering capability of a satellite. Referring to FIG. 11(b), in the case of an earth-moving cell, the cell is served by fixed beams without using the beam-steering capability of a satellite, and the cell continuously moves across the surface of the Earth.

The frequency bands considered for NTN services primarily include the 2 GHz band (L-band: 1 to 2 GHz and S-band: 2 to 4 GHz) for bands below 6 GHz and the DL 20 GHz and UL 30 GHz bands (Ka-band: 26.5 to 40 GHz) for bands above 6 GHz.

FIG. 12 illustrates a position estimation format (ephemeris format) based on orbital parameters.

One of the key concepts of the NTN is that NTN cells are provided by non-geostationary orbit (NGSO) satellites that periodically orbit the Earth. Each satellite has the orbital trajectory thereof, which is included in satellite position estimation information (ephemeris information). Based on the satellite position estimation information, the network may predict feeder link switchovers and manage UE mobility and radio resource control. The BS providing NTN access may provide position estimation information (ephemeris information) about orbital trajectory information or coordinates for an NTN payload. For the position estimation information, the following two position estimation formats may be used.

> Position and velocity state vector position estimation format: 132 bits (<17 bytes).

>> The field size for position (x, y, z) [m] is 78 bits
>> The field size for velocity (vx, vy, vz) [m/s] is 54 bits.

> Orbital parameter position estimation format (orbital parameter ephemeris format) (refer to FIG. 12): 164 bits (<21 bytes).

>> Semi-major axis "$\alpha$" (m) is 33 bits.
>> Eccentricity "e" is 20 bits.
>> Argument of periapsis "$\omega$" (rad) is 28 bits.
>> Longitude of ascending node "$\Omega$" (rad) is 28 bits.
>> Inclination "i" (rad) is 27 bits.
>> Mean anomaly "M" (rad) at epoch time to is 28 bits.

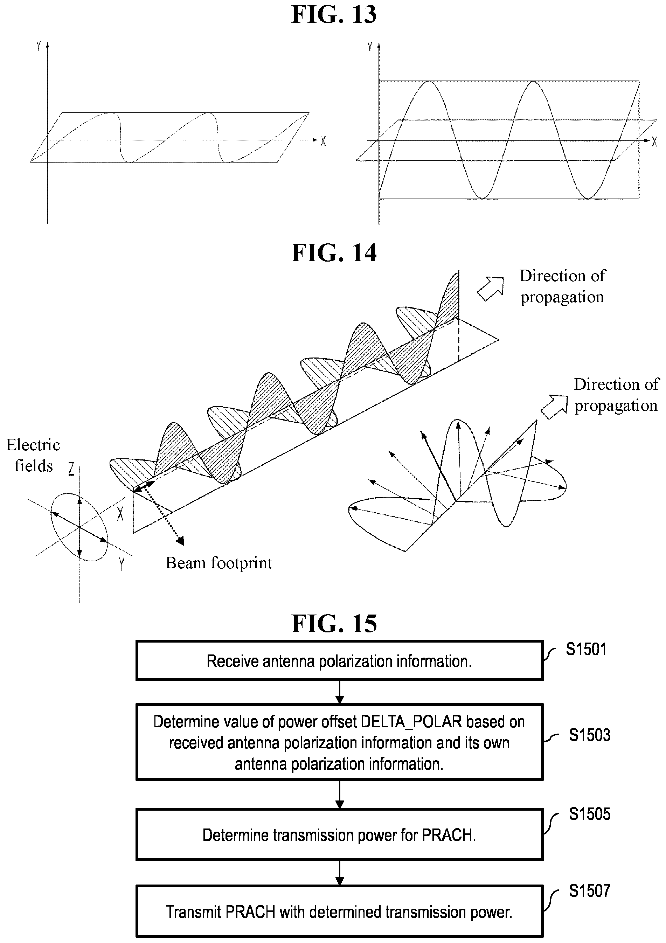

FIGS. 13 and 14 illustrate examples of polarization used in communication. In particular, FIG. 13 shows linear polarization, while FIG. 14 shows circular polarization.

Referring to FIG. 13, linear polarization (or plane polarization) of electromagnetic radiation refers to a polarization state in electrodynamics where an electric field vector or magnetic field vector is confined to a given plane along the direction of propagation. Referring to FIG. 14, circular polarization of an electromagnetic wave refers to a polarization state in electrodynamics where the electromagnetic field of a wave at each point has a constant magnitude and rotates at a constant rate in a plane perpendicular to the direction of propagation. A circularly polarized wave may circulate according to one of the following two rules: clockwise rotation of an electric field vector relative to the direction of propagation, which is referred to as right-hand circular polarization (RHCP); and counter-clockwise rotation of an electric field vector relative to the direction of propagation, which is referred to as left-hand circular polarization (LHCP).

In satellite-based communications, circular polarization is primarily used to enhance the directivity of wave propagation. Information about the type of polarization used by a satellite may be provided to the UE via SI (e.g., SIB). The polarization types that may be signaled to the UE include linear polarization, RHCP, and LHCP.

In an NTN environment, it may be assumed that the UE and BS operate in a line-of-sight (LOS) condition, and thus, the antenna polarization configuration of the BS, such as LHCP or RHCP, may be critical for the receiver. In particular, polarization mismatch between the BS and UE may cause significant performance degradation. For example, if the UE and BS use circular polarization in opposite directions, it becomes difficult for the UE to receive signals from the BS. If the UE uses a linear polarization antenna and the BS uses a circular polarization antenna, a power loss of approximately 3 dB is expected. Such performance degradation may be compensated through closed-loop UL transmission power control between the UE and BS. However, when the UE performs initial access, transmission power control is performed solely through open-loop UL transmission power control without closed-loop UL transmission power control. Therefore, a method for compensating for the effects of polarization mismatch needs to be considered. Hereinafter, implementations of the present disclosure aimed at compensating for the loss of received power at the BS caused by antenna polarization mismatch will be described. In other words, implementations of the present disclosure for correcting transmission power loss due to antenna polarization in the NTN will be described. For example, some implementations of the present disclosure for enhanced UL transmission power control in consideration of transmission power loss caused by antenna polarization will be described.

The previously described elements (e.g., frame structure, NTN system, etc.) may be applied in combination with some implementations of the present disclosure, which will be described later, or may be used to explicitly supplement the implementations.

Additionally, implementations related to UL transmission power control during RACH preamble transmission, which will be described later, may also be similarly applied to other UL transmission power control methods in 3GPP-based systems (e.g., NR, LTE, etc.) described earlier.

In some implementations of the present disclosure described below, the BS may transmit information about the antenna polarization of the BS to the UE through at least one of the following methods. In other words, the BS may provide the UE with information about the antenna polarization mode used by the BS for a related cell (i.e., antenna polarization information) through one of the following methods. The information about the polarization mode, i.e., antenna polarization information, may include an indication of at least one polarization mode (e.g., RHCP, LHCP, etc.).

- Higher layer signaling such as a MAC control element (CE) or an RRC message.
- L1 signaling such as DCI.
- Broadcast SI messages such as an SIB (or MIB).

**<Implementation 1> Preamble Power Offset Based on Antenna Polarization**

If antenna polarization is not considered, the UE determines transmission power $P_{PRACH,b,f,c}(i)$ for a PRACH on an active UL BWP b of a carrier f of a serving cell c based on a DL RS for the serving cell c at a transmission occasion i according to Equation 1 below.

$$> \text{Equation 1: } P_{PRACH,b,f,c}(i) = \min\{P_{CMAX,f,c}(i), P_{PRACH,target,f,c} + PL_{b,f,c}\} \text{ [dBm]}.$$

In Equation 1, $P_{CMAX,f,c}(i)$ is UE-configured maximum output power, which is configured by the UE for the carrier f of the serving cell c in each slot (e.g., see 3GPP TS 38.101-1, 3GPP TS 38.101-2, and 3GPP TS 38.101-3). That is, $P_{CMAX,f,c}(i)$ is for the carrier f of the serving cell c during the transmission occasion i. $P_{PRACH,target,f,c}$ is PRACH target received power, PREAMBLE_RECEIVED_TARGET_POWER for the active UL BWP b of the carrier f of the serving cell c, provided by higher layers (e.g., MAC layer). $PL_{b,f,c}$ is a pathloss for the active UL BWP b of the carrier f, based on the DL RS associated with the PRACH transmission on the active DL BWP of the serving cell c, which is calculated in dB by the UE as *'referenceSignalPower* - higher layer filtered RSRP' in dBm. The RSRP is defined as the linear average of power contributions (in watts (W)) of REs carrying the DL RS. The measured RSRP is filtered by a layer-3 (L3) filter, and a higher layer filter configuration (e.g., L3 filter configuration) for RSRP measurement results from layer-1 (L1) filter(s) may be provided to the UE via higher layer signaling (e.g., RRC signaling). The MAC entity of the UE adjusts PREAMBLE_RECEIVED_TARGET_POWER, for example, according to the following: preambleReceivedTargetPower + DELTA_PREAMBLE + (PREAMBLE_POWER_RAMPING_COUNTER - 1)*PREAMBLE_POWER_RAMPING_STEP + POWER_OFFSET_2STEP_RA. The MAC entity instructs the physical layer to transmit a RACH preamble based on PREAMBLE_POWER_TARGET_POWER. Here, preambleReceivedTargetPower is a value provided to the UE via RRC signaling, and DELTA_PREAMBLE is a predefined value based on the preamble format. PREAMBLE_POWER_RAMPING_COUNTER is a variable that indicates the number of times the preamble power is ramped (i.e., the number of times the transmission power related to PRACH preamble transmission(s) is increased for the random access procedure). PREAMBLE_POWER_RAMPING_STEP is the amount or magnitude by which the preamble power is ramped, which is determined by a value configured to the UE via RRC signaling. POWER_OFFSET_2STEP_RA is a power offset applied when the random access type switches from 2-step random access to 4-step random access during the random access procedure. When the random access procedure is initiated on the serving cell, the UE sets POWER_OFFSET_2STEP_RA to 0 dB. When the random access type switches from 2-step random access to 4-step random access, the UE sets POWER_OFFSET_2STEP_RA to (PREAMBLE_POWER_RAMPING_COUNTER - 1)*(MSGA_PREAMBLEPOWER_RAMPING_STEP - PREAMBLE_POWER_RAMPING_STEP). The details of the method of determining PREAMBLE_RECEIVED_TARGET_POWER at the MAC layer of the UE may be found in 3GPP TS 38.321.

FIG. 15 illustrates a process in which a UE performs UL transmission according to some implementations of the present disclosure.

The UE may receive, from a network (e.g., BS), antenna polarization information about antenna polarization used by the BS or antenna polarization used by the BS for a cell (S1501).

In Equation 1, antenna polarization is not considered. However, in some implementations of the present disclosure, when transmitting a PRACH preamble, the UE may perform UL transmission power control by applying an additional power offset, DELTA_POLAR, based on the antenna polarization information received from the BS and antenna information possessed by the UE (S1503 and S1505). This operation may be limited to UEs with specific UE capabilities.

In some implementations of the present disclosure, the BS may configure a separate PRACH resource or preamble where the additional power offset DELTA_POLAR is applicable. Information about such a PRACH resource or preamble may be provided to the UE via a broadcast SI message such as an SIB (or MIB). When the UE uses Implementation 1, the UE may obtain information about the separate PRACH resource or preamble where the power offset DELTA_POLAR is applicable through the broadcast SI message and apply the power offset DELTA_POLAR exclusively to the corresponding resource or preamble. In some implementations of the present disclosure, when the antenna polarization information regarding the antennas of the BS is transmitted via an SIB (or MIB), the antenna polarization information may be provided through the same SIB (or MIB) that includes information about PRACH resources or preambles where DELTA_POLAR is applicable. Alternatively, the antenna polarization information and the information about the PRACH resource or preamble may be provided through different SIBs.

In some implementations of the present disclosure, the BS may configure PRACH occasion(s) where the additional power offset DELTA_POLAR is applicable. Information about the PRACH occasion(s) may be provided to the UE using the following methods: bitmap pattern and/or mask. For example, if a bitmap of length N is provided as a pattern/mask, an n-th PRACH occasion out of every N PRACH occasions is associated with an n-th bit of the bitmap, starting from system frame number (SFN) 0. The UE may perform PRACH preamble transmission by applying the power offset DELTA_POLAR on a PRACH occasion marked with a bit value of '1'. Information about the bitmap may be provided to the UE via a broadcast SI message such as an SIB (or MIB), L1 signaling, and/or higher layer signaling. For example, when the UE uses Implementation 1, the UE may identify or determine the PRACH occasion where the power offset DELTA_POLAR is applicable through the bitmap included in the broadcast SI message and apply DELTA_POLAR exclusively to the PRACH occasion. In some implementations of the present disclosure, when the antenna polarization information regarding the antennas of the BS is transmitted via an SIB (or MIB), the antenna polarization information may be provided through the same SIB (or MIB) that includes the bitmap. Alternatively, the antenna polarization information and the bitmap may be provided through different SIBs.

In some implementations of the present disclosure, the value of the power offset DELTA_POLAR may be predefined, or the value of the power offset DELTA_POLAR may be provided to the UE through a broadcast SI message such as an SIB (or MIB) from the BS, L1 signaling, or higher layer signaling. The UE may determine whether to apply the power offset DELTA_POLAR or further adjust the value based on the antenna polarization information received from the BS and the antenna information possessed by the UE (S1503). For example, the UE may use a predefined value of 3 dB as the value of the power offset DELTA_POLAR. If the antenna polarization information received from the BS indicates LHCP or RHCP, and if the receiving or transmitting antenna of the UE is a linear polarization antenna, the UE may apply the predefined value. If the antenna polarization information received from the BS matches the polarization of the receiving or transmitting antenna, the UE may set the value of DELTA_POLAR to 0 dB or may not apply the value of DELTA_POLAR.

The power offset DELTA_POLAR may be applied to determine transmission power used for transmitting the PRACH preamble (S1505). For example, the following may be applied when determining the transmission power of the PRACH preamble transmitted in S806 of FIG. 8. The following equations may be applied not only to PRACH preamble transmission in 4-step random access but also to PRACH preamble transmission 2-step random access.

Considering antenna polarization, for example, the UE determines the transmission power $P_{PRACH,b,f,c}(i)$ for the PRACH on the active UL BWP b of the carrier f of the serving cell c based on the DL RS of the serving cell c at the transmission occasion i according to the following equation.

$$> \text{Equation 2:} \quad P_{PRACH,b,f,c}(i) = \min\{P_{CMAX,f,c}(i), P_{PRACH,target,f,c} + PL_{b,f,c} + \text{DELTA\_POLAR}\} \text{ [dBm]}.$$

In Equation 2, $P_{CMAX,f,c}(i)$, $P_{PRACH,target,f,c}$, and $PL_{b,f,c}$ are as described above in Equation 1 and are therefore omitted here.

Alternatively, the UE determines the transmission power $P_{PRACH,b,f,c}(i)$ for the PRACH on the active UL BWP b of the carrier f of the serving cell c based on the DL RS of the serving cell c at the transmission occasion i according to the following equation.

$$> \text{Equation 3:} \quad P_{PRACH,b,f,c}(i) = \min\{P_{CMAX,f,c}(i), P_{PRACH,target,f,c} + PL_{b,f,c} + \text{DELTA\_POLAR}\} \text{ [dBm]}.$$

In Equation 3, $P_{CMAX,f,c}(i)$ and $PL_{b,f,c}$ are as described above in Equation 1 and are therefore omitted here. Unlike in Equation 1 or Equation 2, in Equation 3, the PRACH target received power $P_{PRACH,target,f,c}$ for the active UL BWP b of the carrier f of the serving cell c provided by higher layers (e.g., MAC layer), which is represented as PREAMBLE_RECEIVED_TARGET_POWER, may be determined as follows: preambleReceivedTargetPower + DELTA_PREAMBLE + DELTA_POLAR + (PREAMBLE_POWER_RAMPING_COUNTER - 1)* PREAMBLE _POWER_RAMPING_STEP + POWER_OFFSET_2STEP_RA. Here, DELTA_PREAMBLE is a value determined based on the preamble format, and PREAMBLE_POWER_RAMPING_COUNTER is the number of times the UE attempts to transmit a random access preamble. As explained in Equation 1, preambleReceivedTargetPower, POWER_OFFSET_2STEP_RA, and PREAMBLE _POWER_RAMPING_STEP are values determined by higher layer signaling (e.g., RRC signaling from the BS).

The UE may transmit a PRACH at a RACH occasion on the active UL BWP b of the carrier f of the serving cell c using the transmission power determined based on Equation 2 or Equation 3 (S1507).

## <Implementation 2> Autonomous Power Ramping for Polarization Loss Compensation

Generally, when a random access procedure is initiated on a serving cell, the UE (specifically, the MAC entity of the UE) sets PREAMBLE _POWER_RAMPING_COUNTER to 1. For a random access preamble (i.e., when transmitting a PRACH preamble, the UE (specifically, the MAC entity of the UE) operates as follows for each random access preamble (i.e., PRACH preamble)),

> If PREAMBLE_TRANSMISSION_COUNTER is greater than 1; and
> If a notification to suspend a power ramping counter is not received from lower layers (i.e., physical layer), and
> If a Listen-Before-Talk (LBT) failure indication is not received from lower layers (i.e., physical layer) for the last random access preamble transmission; and
> If a selected SSB or CSI-RS is not changed from the selection in the last random access preamble transmission:

>> PREAMBLE_POWER_RAMPING_COUNTER is incremented by 1.

If the UE changes a spatial domain transmission filter prior to PRACH retransmission, layer 1 (i.e., physical layer) of the UE notifies higher layers (e.g., MAC layer) to suspend the power ramping counter. Alternatively, due to predefined reasons (for example, power allocation for PUSCH/PUCCH/PRACH/SRS transmission, power allocation in E-UTRA-NR dual connectivity (EN-DC), NR-E-UTRA dual connectivity (NE-DC), or NR-NR dual connectivity (NR-DC) operations, slot format determination as described in Clause 11.1 of 3GPP TS 38.213, overlapping between PUSCH/PUCCH/-PRACH/SRS transmission occasions in the same slot, or small gaps between PRACH transmission and PUSCH/-PUCCH/SRS transmission), if the UE transmits no PRACH at a transmission occasion, layer 1 of the UE may notify the higher layers (e.g., MAC layer) to suspend the power ramping counter. Alternatively, due to predefined reasons (for example, power allocation for PUSCH/PUCCH/PRACH/SRS transmission or power allocation in EN-DC, NE-DC, or NR-DC operations), if the UE transmits a PRACH with reduced power at a transmission occasion, layer 1 (i.e., physical layer) of the UE may notify the higher layers (e.g., MAC layer) to suspend the power ramping counter.

To compensate for losses caused by polarization mismatch between the UE and BS, the initiation of the power ramping operation may be adjusted. For example, if polarization mismatch between the UE and BS is expected, the UE may initialize PREAMBLE _POWER_RAMPING_COUNTER to 2 instead of 1 at the start of the random access procedure. Alternatively, instead of incrementing PREAMBLE_POWER_RAMPING_COUNTER by 1, the UE may increase PREAMBLE_POWER_RAMPING_COUNTER by 2 when transmitting each preamble. Here, the case where polarization mismatch is expected refers to when antenna polarization information received from the BS differs from the polarization of the receiving or transmitting antenna of the UE. For example, polarization mismatch may occur when the antenna polarization information received from the BS indicates LHCP or RHCP, and the receiving or transmitting antenna of the UE is a vertically polarized antenna.

Implementation 2 may be applied independently of Implementation 1. Alternatively, Implementation 2 may also be applied together with Implementation 1. For example, Implementation 2 may be used when determining PREAMBLE _POWER_RAMPING_COUNTER in relation to Equation 1, Equation 2, or Equation 3 of Implementation 1.

The UE may determine transmission power by applying PREAMBLE _POWER_RAMPING_COUNTER according to Implementation 2 (S1505) and transmit the PRACH at an RO on an active UL BWP b of a carrier f of a serving cell c using the determined transmission power (S1507).

## Implementation 3: PRACH Repetition Based on Antenna Polarization

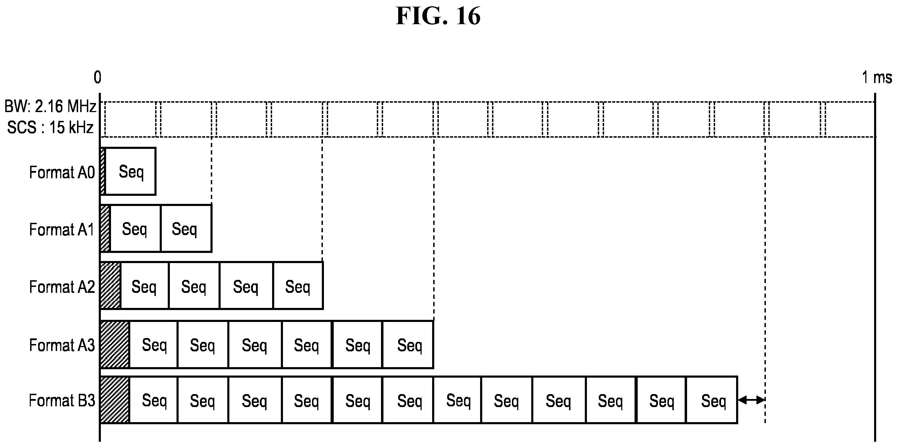

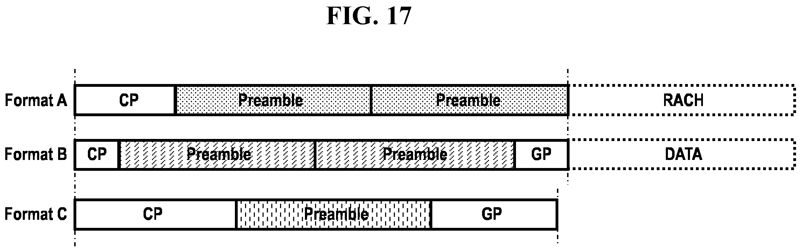

FIGS. 16 and 17 illustrate PRACH preamble formats available in some implementations of the present disclosure.

For the current PRACH preamble, there are long sequences and short sequences. A PRACH preamble using a short sequence of length 139 is structured in the form of CP + sequence or CP + sequence + sequence + ... as illustrated in FIGS. 16 and 17. Additionally, as shown in FIGS. 16 and 17, depending on the PRACH preamble formats, Format A is structured as CP + sequence + sequence, Format B is structured as CP + sequence + sequence + GP, and Format C is structured as CP + sequence + GP. Such various PRACH preamble formats are designed considering factors such as the size of a cell or high-speed scenarios where the UE is moving rapidly. A PRACH preamble format may be selected and used according to the environment of the UE and cell.

When transmitting a PRACH preamble, the UE may perform repeated transmission of the PRACH preamble based on antenna polarization information received from the BS and antenna information possessed by the UE. This operation may be limited to UEs with specific UE capabilities.

The BS may configure a separate PRACH resource (e.g., PRACH occasion) or preamble available for repeated preamble transmission. Information about the PRACH resource or preamble may be provided to the UE via a broadcast SI message such as an SIB (or MIB). When the UE uses Implementation 3, the UE may obtain the information about the separate PRACH resource or preamble available for the repeated transmission through the broadcast SI message. The UE may then apply the repeated transmission exclusively to the PRACH resource or preamble. In some implementations of the present disclosure, when the antenna polarization information regarding the antennas of the BS is transmitted via an SIB (or MIB), the antenna polarization information may be provided through the same SIB (or MIB) that contains the configuration of PRACH resource or preamble available for repeated preamble transmission. Alternatively, the antenna polarization information and the configuration of the PRACH resource or preamble may be provided through different SIBs.

To allow the BS to receive repeated transmission of a PRACH preamble from the UE, the UE and BS need to determine a PRACH resource (e.g., RACH occasion (RO)) for the repeated transmission of the PRACH preamble using the same method. For example, the UE may assume that K consecutive ROs in time within the same frequency band are associated with a single SSB and perform repeated transmission of a PRACH preamble across the K ROs. If ROs associated with a single SSB are not multiplexed in the frequency domain, K consecutive ROs in time such as RO indices {0, 1, 2, ..., K-1}, RO indices {K, K+1, K+2, ..., 2K-1}, ..., RO indices {(n-1)K, (n-1)K+1, ..., nK-1} may be considered as a single RO group (for example, an n-th RO group is considered to consist of ROs with indices {(n-1)K, (n-1)K+1, ..., nK-1}). A single RO group associated with a single SSB or a single RO group associated with the same SSB groups may be determined by using a single RO group, instead of using a single RO in the method described in Clause 8.1 of 3GPP TS 38.213.

Alternatively, if ROs are multiplexed in the frequency domain (e.g., when msg 1-FDM = two is configured), a plurality of consecutive ROs in time within the same frequency band such as RO indices {0, 2, 4, ..., 2(K-1)}, RO indices {1, 3, 5, ..., 2(K-1)-1}, ..., and RO indices {2K*Floor(n/2) + Mod(n,2), 2K*Floor(n/2) + Mod(n,2) + 2, ...}, ... are considered as a single RO group. A single RO group associated with a single SSB or a single RO group associated with the same SSB groups may be determined by using a single RO group, instead of using a single RO in the method described in Clause 8.1 of 3GPP TS 38.213.

Alternatively, if ROs are multiplexed in the frequency domain (e.g., when msg1-FDM = two is configured), to achieve frequency diversity, $X_n$ is assumed to be 2K*Floor(n/2) + Mod(n,2). Then, a plurality of ROs alternating in frequency and consecutive in time such as RO indices {0, 3, 4, 7, ...}, RO indices {1, 2, 5, 6, ...}, ... , RO indices {$X_n$, $X_n$ + 3 - 2 Mod(n,2), $X_n$ + 4, {$X_n$, $X_n$ + 2*(3 - 2 Mod(n,2)), $X_n$ + 2*4, ...}, ... are considered as a single RO group. A single RO group associated with a single SSB or a single RO group associated with the same SSB groups may be determined by using a single RO group, instead of using a single RO in the method described in Clause 8.1 of 3GPP TS 38.213.

In Implementation 3, a predefined value (e.g., 2) may be used as the number of times that PRACH preamble transmission is repeated, or a value included in the PRACH resource or preamble information may be used as the number of times that PRACH preamble transmission is repeated. For example, when repeated transmission for a PRACH preamble is applied, the UE may repeat PRACH transmission with the same preamble format for a predefined number of repetitions. If the predefined number is 2, for instance, the UE may transmit a PRACH in the format of 'CP + N*preamble (+ GP)' twice. The UE may determine whether to apply the repetitions or adjust the number of repetitions based on the antenna polarization information received from the BS and the antenna information possessed by the UE. For example, if the antenna polarization information received from the BS indicates LHCP or RHCP, and the receiving or transmitting antenna of the UE is a vertically polarized antenna, the UE may repeat the transmission of the PRACH preamble by applying the determined number of repetitions. On the other hand, if the antenna polarization information received from the BS matches the polarization of the receiving or transmitting antenna of the UE, the UE may not to perform the repeated transmission.

As another example, repeated transmission of a PRACH preamble may be determined based on the power headroom of the UE. For instance, the UE may apply the repeated transmission only if the preamble transmission power determined in Implementation 1 or a conventional UL transmission power control process is equal to the UE-configured maximum output power $P_{CMAX,f,c}(i)$. Otherwise, the UE may not perform the repeated transmission.

Implementation 3 may be applied independently of Implementation 1 and/or Implementation 2. Alternatively, Implementation 3 may be applied together with Implementation 1 and/or Implementation 2.

The UE may determine whether to perform repeated transmission of a PRACH preamble according to Implementation 3 and transmit or repeatedly transmit the PRACH (S1507).

**<Implementation 4> Antenna Polarization Alignment**

The UE may change antenna polarization used for transmission/reception based on antenna polarization information received from the BS. This operation may only be performed by UEs capable of dynamically changing the antenna polarization. As another example, if the UE is capable of dynamically changing the antenna polarization thereof but does not receive information regarding the antenna polarization of the BS from the BS, the UE may transmit a random access preamble using different antenna polarization at each RO (i.e., PRACH occasion) during a random access procedure or a random access procedure where repeated transmission is used. In this case, the criterion for changing the antenna polarization may be sequentially changing available antenna polarization based on the first RO from the first symbol of SFN 0 (i.e., the first RO in the first PRACH slot of the frame with SFN 0). Alternatively, in the random access procedure where repeated transmission is used, the available antenna polarization may be sequentially changed based on the first RO of a bundle of repeated transmissions. Accordingly, the UE may perform random access without unnecessary increases in transmission power, and the BS may effectively receive the random access attempt of the UE by blind decoding or combining the transmissions of the UE. Particularly, when circular polarization is used, the degradation in reception performance due to polarization mismatch may be significant. Therefore, Implementation 4 may be useful when the UE uses circular polarization such as RHCP or LHCP.

When the BS is capable of using different antenna polarization for each BWP, if a UL/DL BWP is changed, the UE may change transmitting/receiving antenna polarization of the UE to the antenna polarization associated with the corresponding BWP. To this end, the antenna polarization associated with each BWP may be provided through L1 signaling or higher layer signaling from the BS.

Alternatively, antenna polarization to be used by the UE may be dynamically indicated through a PDCCH order of PRACH transmission or a PUSCH/PUCCH transmission scheduling message. For example, DCI scheduling PRACH transmission or PUSCH/PUCCH transmission may include a DCI field indicating the antenna polarization for the UE. When scheduling is performed with a DCI format that does not include the corresponding DCI field, for example, DCI format 0_0 or DCI format 1_0, the UE may assume linear polarization or determine the antenna polarization based on default antenna polarization parameters configured for such cases. The default antenna polarization parameters may be configured through higher layer signaling (e.g., RRC signaling) from the BS and may indicate one of antenna polarizations available to the UE.

The methods, embodiments, or descriptions for implementing the implementations described in the present disclosure (e.g., Implementation 1, Implementation 2, Implementation 3, and/or Implementation 4) may be applied individually or in combination with one or more implementations (embodiments or descriptions).

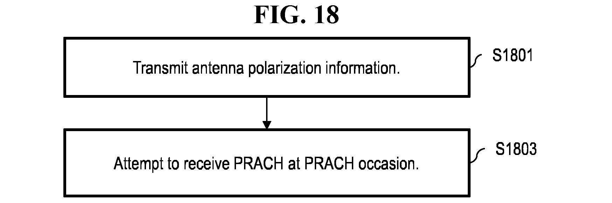

FIG. 18 illustrates a process in which a BS performs UL reception according to some implementations of the present disclosure.

The BS may transmit information about antenna polarization used by the BS or antenna polarization used by the BS for a cell (S1801). For example, the BS may include antenna polarization information about the antennas of the BS in SI on the cell and transmit the SI over the cell. Additionally, the BS may further provide the UE with the information described in Implementation 1, Implementation 2, Implementation 3, or Implementation 4.

The BS may attempt to receive a PRACH at RO(s) (S1803). Upon receiving a PRACH preamble at the RO, the BS may transmit a RAR in response to the PRACH preamble.

Although not illustrated in FIG. 15 and FIG. 18, UE capability information related to some implementations of the present disclosure (e.g., Implementation 1, Implementation 2, Implementation 3, and/or Implementation 4) may be reported by the UE to the BS. For example, the UE capability information may include antenna polarizations supported by the UE, the applicability of repeated transmission to compensate for polarization mismatch, and/or the preamble power offset DELTA_POLAR for compensating polarization mismatch. The UE capability information may be reported periodically, semi-persistently, and/or aperiodically. The BS may configure or instruct the operations described in Implementation 1, Implementation 2, Implementation 3, and/or Implementation 4 based on the capabilities of the UE.

The BS may transmit the SI to the UE on a PBCH (e.g., see S802 in FIG. 8). The SI received by the UE may include the aforementioned NTN-related information (e.g., SIB19), information regarding the antenna polarization of the BS, information regarding PRACH resources and preambles for random access, and/or information regarding whether repeated transmission is performed. Upon receiving the system information, the UE may determine the UL transmission power for transmitting the PRACH preamble by applying, for example, Implementation 1, Implementation 2, and/or Implementation 3 described in S806 of FIG. 8.

According to some implementations of the present disclosure, transmission power loss caused by polarization mismatch between the receiver and transmitter may be corrected or compensated. According to some implementations of the present disclosure, the loss of received power at the BS caused by the antenna polarization of the UE may be quickly compensated. According to some implementations of the present disclosure, even if there is mismatch in antenna polarization between the UE and BS, the performance of PRACH transmission performance at the UE may be enhanced.

The UE may perform operations according to some implementations of the present disclosure in association with UL signal transmissions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

Referring to FIG. 15, a method performed by the UE or the operations of the UE, processing device, computer-readable (non-transitory) storage medium, and/or computer program product may include: acquiring SI on a cell; determining an RO based on the system information; determining transmission power for a PRACH in a random access procedure; and transmitting the PRACH on the cell at the RO with the transmission power. Determining the transmission power may include: determining a power offset value based on antenna polarization information received from a BS; and determining the transmission power based on the power offset value.

In some implementations, the transmission power may be determined according to Equation 2.

In some implementations, the transmission power may be determined according to Equation 3.

In some implementations, determining the power offset value may include determining the power offset value as 3 dB based on that the antenna polarization information is different from antenna polarization information possessed by the UE.

In some implementations, determining the power offset value may include determining the power offset value as 0 dB based on that the antenna polarization information is identical to antenna polarization information possessed by the UE.

In some implementations, a DL RS may include an SSB.

In some implementations, the RO may be related to an index of the SSB

In some implementations, the method performed by the UE or the operations may include receiving broadcast SI message(s) according to Implementation 1, Implementation 2, or Implementation 3 of the present disclosure.

The BS may perform operations according to some implementations of the present disclosure in association with UL signal receptions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

Referring to FIG. 18, a method performed by the BS or the operations of the BS, processing device, computer-readable (non-transitory) storage medium, and/or computer program product may include: transmitting SI on a cell; attempting to receive a PRACH in a random access procedure at an RO based on the system information; and transmitting an RAR for the PRACH based on receiving the PRACH on the cell at the RO. The SI may include antenna polarization information regarding antennas of the BS. The PRACH may be transmitted with transmission power determined based on a power offset value, which is determined based on the antenna polarization information.

In some implementations, the method performed by the BS or the operations may further include transmitting the power offset value for determining the transmission power for the PRACH.

In some implementations, the method performed by the BS or the operations may include transmitting broadcast SI message(s) according to Implementation 1, Implementation 2, or Implementation 3 of the present disclosure.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

**Claims**

1. A method of transmitting an uplink signal by a user equipment (UE) in a wireless communication system, the method comprising:

acquiring system information regarding a cell;
determining a random access channel (RACH) occasion based on the system information;
determining transmission power for a physical random access channel (PRACH) in a random access procedure; and
transmitting the PRACH on the cell at the RACH occasion with the transmission power,
wherein determining the transmission power comprises:

determining a power offset value based on antenna polarization information received from a base station (BS); and
determining the transmission power based on the power offset value.

2. The method of claim 1, wherein the transmission power is determined based on:

$$P_{PRACH,b,f,c}(i) = \min\{P_{CMAC,f,c}(i), P_{PRACH,target,f,c} + PL_{b,f,c} + DELTA\_POLAR\} \; [dBm],$$

where $P_{CMAC,f,c}(i)$ is UE-configured maximum output power for a carrier f of the cell c during a RACH occasion i,
$P_{PRACH,target,f,c}$ is PRACH target received power for an active uplink (UL) bandwidth part (BWP) b of the carrier f of the cell c,
$PL_{b,f,c}$ is a pathloss for the active UL BWP b of the cell c, which is calculated based on a downlink reference signal related to the PRACH transmission, and
DELTA_POLAR is the power offset value.

3. The method of claim 2, wherein $P_{PRACH,target,f,c}$ is determined based on:

preambleReceivedTargetPower + DELTA_PREAMBLE + (PREAMBLE_POWER_RAMPING_COUNTER - 1) * PREAMBLE_POWER_RAMPING_STEP + POWER_OFFSET_2STEP_RA,

where preambleReceivedTargetPower, POWER_OFFSET_2STEP_RA, and PREAMBLE_POWER_RAMPING_STEP are values determined based on higher layer parameters received from the BS,
DELTA_PREAMBLE is a predefined value based on a preamble format of the PRACH, and
PREAMBLE_POWER_RAMPING_COUNTER is a number of times that transmission power is ramped for the random access procedure.

4. The method of claim 1, wherein the transmission power is determined based on:

$$P_{PRACH,b,f,c}(i) = \min\{P_{CMAC,f,c}(i), P_{PRACH,target,f,c} + PL_{b,f,c}\} \; [dBm],$$

where $P_{CMAC,f,c}(i)$ is UE-configured maximum output power for a carrier f of the cell c during a RACH occasion i,
$P_{PRACH,target,f,c}$ is PRACH target received power for an active uplink (UL) bandwidth part (BWP) b of the carrier f of the cell c, and
$PL_{b,f,c}$ is a pathloss for the active UL BWP b of the cell c, which is calculated based on a downlink reference signal related to the PRACH transmission, and
wherein $P_{PRACH,target,f,c}$ is determined based on:

preambleReceivedTargetPower + DELTA_PREAMBLE + DELTA_POLAR + (PREAMBLE_POWER_RAMPING_COUNTER - 1) * PREAMBLE_POWER_RAMPING_STEP + POWER_OFFSET_2STEP_RA,

where preambleReceivedTargetPower, POWER_OFFSET_2STEP_RA, and PREAMBLE_POWER_RAMPING_STEP are values determined based on higher layer parameters received from the BS,
DELTA_PREAMBLE is a predefined value based on a preamble format of the PRACH,
PREAMBLE_POWER_RAMPING_COUNTER is a number of times that transmission power is ramped for the random access procedure, and
DELTA_POLAR is the power offset value.

5. The method of claim 1, wherein determining the power offset value comprises:

determining the power offset value as 3 dB based on the antenna polarization information being different from antenna polarization information possessed by the UE.

6. The method of claim 1, wherein determining the power offset value comprises:
determining the power offset value as 0 dB based on the antenna polarization information being identical to antenna polarization information possessed by the UE.

7. The method of claim 1, wherein the downlink reference signal is a synchronization signal block (SSB), and wherein the RACH occasion is related to an index of the SSB.

8. A user equipment (UE) configured to transmit an uplink signal in a wireless communication system, the UE comprising:

   at least one transceiver;
   at least one processor; and
   at least one computer memory operably connected to the at least one processor and storing instructions that, when executed, cause the at least one processor to perform operations comprising:

      acquiring system information regarding a cell;
      determining a random access channel (RACH) occasion based on the system information;
      determining transmission power for a physical random access channel (PRACH) in a random access procedure; and
      transmitting the PRACH on the cell at the RACH occasion with the transmission power,
      wherein determining the transmission power comprises:

         determining a power offset value based on antenna polarization information received from a base station (BS); and
         determining the transmission power based on the power offset value.

9. A processing device in a wireless communication system, the processing device comprising:

   at least one processor; and
   at least one computer memory operably connected to the at least one processor and storing instructions that, when executed, cause the at least one processor to perform operations comprising:

      acquiring system information regarding a cell;
      determining a random access channel (RACH) occasion based on the system information;
      determining transmission power for a physical random access channel (PRACH) in a random access procedure; and
      transmitting the PRACH on the cell at the RACH occasion with the transmission power,
      wherein determining the transmission power comprises:

         determining a power offset value based on antenna polarization information received from a base station (BS); and
         determining the transmission power based on the power offset value.

10. A computer-readable storage medium configured to store at least one program code comprising instructions that, when executed, cause at least one processor to perform operations comprising:

      acquiring system information regarding a cell;
      determining a random access channel (RACH) occasion based on the system information;
      determining transmission power for a physical random access channel (PRACH) in a random access procedure; and
      transmitting the PRACH on the cell at the RACH occasion with the transmission power,
      wherein determining the transmission power comprises:

         determining a power offset value based on antenna polarization information received from a base station (BS); and

26

determining the transmission power based on the power offset value.

11. A method of receiving, by a base station (BS), an uplink signal from a user equipment (UE) in a wireless communication system, the method comprising:

   transmitting system information regarding a cell;
   attempting to receive a physical random access channel (PRACH) in a random access procedure at a random access channel (RACH) occasion based on the system information; and
   transmitting a random access response for the PRACH based on receiving the PRACH on the cell at the RACH occasion,
   wherein the system information includes antenna polarization information on antennas of the BS, and
   wherein the PRACH is transmitted with transmission power determined based on a power offset value, which is determined based on the antenna polarization information.

12. A base station (BS) configured to receive an uplink signal from a user equipment (UE) in a wireless communication system, the BS comprising:

   at least one transceiver;
   at least one processor; and
   at least one computer memory operably connected to the at least one processor and storing instructions that, when executed, cause the at least one processor to perform operations comprising:

      transmitting system information regarding a cell;
      attempting to receive a physical random access channel (PRACH) in a random access procedure at a random access channel (RACH) occasion based on the system information; and
      transmitting a random access response for the PRACH based on receiving the PRACH on the cell at the RACH occasion,
      wherein the system information includes antenna polarization information on antennas of the BS, and
      wherein the PRACH is transmitted with transmission power determined based on a power offset value, which is determined based on the antenna polarization information.

13. The BS of claim 12, wherein the operations further comprise:
   transmitting the power offset value.

## FIG. 1

# FIG. 2

First Device 100

102 — Processor(s)

Transceiver(s)

Memory(s)

104      106

108      208

Second Device 200

Transceiver(s)

Processor(s) — 202

Memory(s)

206      204

# FIG. 3

100, 200

Device

110 — Communication unit
(e.g., 5G communication unit)

112 — Communication circuit
(e.g., processor(s), memory(s))

114 — Transceiver(s)
(e.g., RF unit(s), antenna(s))

Control unit
(e.g., processor(s)) — 120

Memory unit
(e.g., RAM, storage) — 130

Additional components
(e.g., power unit/battery, I/O unit,
driving unit, computing unit) — 140

# FIG. 4

# FIG. 5

# FIG. 6

Initial Cell Search — PSS/SSS & [DL RS] & PBCH — S11

System Information Reception — PDCCH/ PDSCH (BCCH) — S12

Random Access Procedure — PRACH (S13), PDCCH/ PDSCH (S14), PUSCH (S15), PDCCH/ PDSCH (S16)

General DL/UL Tx/Rx — PDCCH/ PDSCH (S17), PUSCH/ PUCCH (S18)

- DL/UL HARQ-ACK
- UE CSI report via PUSCH and/or PUCCH

# FIG. 7

# FIG. 8

UE                                                                                    BS

S802 — SSB

S804 — RMSI + OSI

S806 — Msg1 on PRACH: preamble

S808 — Msg2 on PDSCH: random access response
(resource allocation)

S810 — Msg3 on PUSCH: scheduled transmission
(RRC Setup Request)

S812 — Msg4 on PDSCH: contention resolution
(RRC Setup)

S814 — SSB / CSI-RS

S816 — DCI on PDCCH

S818 — PUSCH / PUCCH

S820a                                                                              S820b

# FIG. 9

$K_0=0$, S=7, L=7, PDSCH Mapping Type B

$K_0=1$, S=4, L=4, PDSCH Mapping Type B

$K_0=2$, S=1, L=9, PDSCH Mapping Type A

▨ Symbol containing DMRS     ▦ Symbol containing PDSCH

(a) Example of PDSCH time domain resource allocation

$K_2=1$, S=2, L=10, PUSCH Mapping Type B

$K_2=2$, S=0, L=12, PUSCH Mapping Type A

▨ Symbol containing DMRS     ▦ Symbol containing PUSCH

(b) Example of PUSCH time domain resource allocation

EP 4 572 433 A1

# FIG. 10

Satellite
(or UAS platform)

Service link

Feeder link

Data network

Gateway

UE

Beam footprint

# FIG. 11

Satellite at T0    Satellite at T1

Beam footprint

(a)

Satellite at T0    Satellite at T1

Beam footprint    Beam footprint

(b)

# FIG. 12

Celestial body

Semi-major axis
a

Mean anomaly
M

Argument of periapsis
ω

Ω

Longitude of ascending node

ϒ
Reference direction

Plane of reference

i

Inclination

Orbit

# FIG. 13

# FIG. 14

Direction of propagation

Direction of propagation

Electric fields

Beam footprint

# FIG. 15

| | |
|---|---|
| Receive antenna polarization information. | S1501 |
| Determine value of power offset DELTA_POLAR based on received antenna polarization information and its own antenna polarization information. | S1503 |
| Determine transmission power for PRACH. | S1505 |
| Transmit PRACH with determined transmission power. | S1507 |

# FIG. 16

EP 4 572 433 A1

FIG. 17

# FIG. 18

| | |
|---|---|
| Transmit antenna polarization information. | S1801 |

↓

| | |
|---|---|
| Attempt to receive PRACH at PRACH occasion. | S1803 |

## INTERNATIONAL SEARCH REPORT

| International application No. |
| --- |
| **PCT/KR2023/011966** |

| A. | CLASSIFICATION OF SUBJECT MATTER |
| --- | --- |

H04W 52/36(2009.01)i; H04W 52/32(2009.01)i; H04W 52/14(2009.01)i; H04W 8/24(2009.01)i; H04W 48/10(2009.01)i; H04W 74/08(2009.01)i; H04W 84/06(2009.01)i

According to International Patent Classification (IPC) or to both national classification and IPC

| B. | FIELDS SEARCHED |
| --- | --- |

Minimum documentation searched (classification system followed by classification symbols)

H04W 52/36(2009.01); H04B 7/06(2006.01); H04B 7/08(2006.01); H04W 52/14(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 (uplink), 안테나 (antenna), 편광 (polarization), 오프셋 (offset), PRACH (physical random access channel)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2022-0167424 A1 (APPLE INC.) 26 May 2022 (2022-05-26)<br>See paragraphs [0044]-[0210]. | 1,7-13 |
| A | | 2-6 |
| Y | KR 10-2021-0036828 A (APPLE INC.) 05 April 2021 (2021-04-05)<br>See paragraphs [0152]-[0176]. | 1,7-13 |
| A | US 2022-0086765 A1 (APPLE INC.) 17 March 2022 (2022-03-17)<br>See claims 1-7. | 1-13 |
| A | WO 2022-025519 A1 (LG ELECTRONICS INC.) 03 February 2022 (2022-02-03)<br>See claims 1-13. | 1-13 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2023** | **30 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011966** |

### C.  DOCUMENTS CONSIDERED TO BE RELEVANT

| Category* | Citation of document, with indication, where appropriate, of the relevant passages | Relevant to claim No. |
| --- | --- | --- |
| A | KR 10-2021-0142647 A (GUANGDONG OPPO MOBILE TELECOMMUNICATIONS CORP., LTD.) 25 November 2021 (2021-11-25)<br>        See paragraphs [0047]-[0096]. | 1-13 |

Form PCT/ISA/210 (second sheet) (July 2022)

## INTERNATIONAL SEARCH REPORT
### Information on patent family members

International application No.

**PCT/KR2023/011966**

| Patent document cited in search report | | | Publication date (day/month/year) | Patent family member(s) | | | Publication date (day/month/year) |
|---|---|---|---|---|---|---|---|
| US | 2022-0167424 | A1 | 26 May 2022 | CN | 113785624 | A | 10 December 2021 |
| | | | | EP | 3963963 | A1 | 09 March 2022 |
| | | | | WO | 2020-223731 | A1 | 05 November 2020 |
| KR | 10-2021-0036828 | A | 05 April 2021 | CN | 112566270 | A | 26 March 2021 |
| | | | | CN | 112566270 | B | 15 November 2022 |
| | | | | CN | 115734382 | A | 03 March 2023 |
| | | | | CN | 115915468 | A | 04 April 2023 |
| | | | | EP | 3799511 | A1 | 31 March 2021 |
| | | | | KR | 10-2022-0120531 | A | 30 August 2022 |
| | | | | KR | 10-2023-0019902 | A | 09 February 2023 |
| | | | | KR | 10-2434829 | B1 | 22 August 2022 |
| | | | | KR | 10-2493036 | B1 | 31 January 2023 |
| | | | | KR | 10-2561693 | B1 | 28 July 2023 |
| | | | | US | 2021-0100039 | A1 | 01 April 2021 |
| US | 2022-0086765 | A1 | 17 March 2022 | CN | 113302989 | A | 24 August 2021 |
| | | | | WO | 2020-150658 | A1 | 23 July 2020 |
| WO | 2022-025519 | A1 | 03 February 2022 | KR | 10-2023-0044361 | A | 04 April 2023 |
| | | | | US | 2023-0246781 | A1 | 03 August 2023 |
| KR | 10-2021-0142647 | A | 25 November 2021 | AU | 2019-439359 | A1 | 28 October 2021 |
| | | | | CN | 113170308 | A | 23 July 2021 |
| | | | | CN | 113645643 | A | 12 November 2021 |
| | | | | CN | 113645643 | B | 12 September 2023 |
| | | | | EP | 3926995 | A1 | 22 December 2021 |
| | | | | EP | 3926995 | A4 | 02 March 2022 |
| | | | | JP | 2022-531649 | A | 08 July 2022 |
| | | | | JP | 7348301 | B2 | 20 September 2023 |
| | | | | US | 2022-0015156 | A1 | 13 January 2022 |
| | | | | WO | 2020-199037 | A1 | 08 October 2020 |

Form PCT/ISA/210 (patent family annex) (July 2022)